(19) Europäisches Patentamt
European Patent Office
Office européen des brevets

(11) **EP 1 156 293 B1**

(12) **EUROPÄISCHE PATENTSCHRIFT**

(45) Veröffentlichungstag und Bekanntmachung des Hinweises auf die Patenterteilung:
**18.04.2007 Patentblatt 2007/16**

(51) Int Cl.:
*F28D 20/02* *(2006.01)*

(21) Anmeldenummer: **01108999.2**

(22) Anmeldetag: **11.04.2001**

(54) **Wärmetauscher, insbesondere Mikrostruktur-Wärmetauscher**

Heat exchanger, more particularly microstructure heat exchanger

Echangeur de chaleur, en particulier échangeur de chaleur à microstructures

(84) Benannte Vertragsstaaten:
**CH DE FR GB IT LI**

(30) Priorität: **16.05.2000 DE 10023949**

(43) Veröffentlichungstag der Anmeldung:
**21.11.2001 Patentblatt 2001/47**

(73) Patentinhaber: **ROBERT BOSCH GMBH**
**70442 Stuttgart (DE)**

(72) Erfinder:
• **Magenau, Horst**
**70839 Gerlingen (DE)**
• **Breuer, Norbert**
**71254 Ditzingen (DE)**
• **Satzger, Peter**
**70839 Gerlingen (DE)**

(56) Entgegenhaltungen:
DE-A- 3 111 863        DE-A- 19 739 389
US-A- 4 098 852        US-A- 4 676 305
US-A- 5 079 619

## Beschreibung

Die Erfindung betrifft einen Wärmetauscher, insbesondere einen Mikrostruktur-Wärmetauscher, nach der Gattung des Hauptanspruches.

Stand der Technik

Die Speicherung von Wärme bzw. Kälte kann neben einer Speicherung in Form von sensibler Wärme auch in latenter Wärme erfolgen, das heißt in Stoffen, die bei Wärmezufuhr beziehungsweise Wärmeabfuhr einen Phasenwechsel durchlaufen. Derartige Materialien sind unter dem Begriff "phase change material" (PCM) bekannt. Nachteilig bei diesen Materialien ist, dass sie im festen Zustand häufig eine geringe Wärmeleitfähigkeit aufweisen, so dass bei einer Wärmezufuhr beziehungsweise einer Wärmeabfuhr kurze Wärmediffusionswege im Feststoff erforderlich sind. Gleichzeitig erfordert dies eine hohe Dichte von Wärmeaustauscherstrukturen, um eine effektive Wärmeeinkopplung bzw. Wärmeauskopplung zu gewährleisten.

Da die Herstellung einer Vielzahl von insbesondere kleinen Röhrchen und das Zusammenfügen dieser Röhrchen zu einem Wärmetauscher in der Fertigung sehr teuer ist, wird bisher die effektive Wärmeleitfähigkeit in derartigen Materialien vielfach durch Lamellen zwischen Rohren beziehungsweise Platten in dem Wärmetauscher verbessert. Dies führt jedoch zu einem erhöhten Kostenaufwand und insbesondere zu einem zusätzlichen Gewicht und Volumen dieser Wärmetauscher, was unter anderem beim Einsatz.in Fahrzeugen nachteilig ist.

Weiter tritt bei den erläuterten Materialien, die bei Wärmezufuhr bzw. -abfuhr einen Phasenwechsel durchlaufen, in der Praxis stets eine Volumenänderung (Ausdehnung oder Kontraktion) auf, was zu erheblichen mechanischen Belastungen innerhalb des Wärmetauschers führt. Eine derartige Volumenänderung wird beispielsweise durch eine Kristallisation oder ein Schmelzen verursacht.

Zur Verringerung dieser Belastungen wurde bereits vorgeschlagen, die Volumenänderung durch ein elastisches Verhalten des Wärmeaustauschers zu kompensieren. So werden beispielsweise in Eisspeichern der Firma Webasto, Stockdorf, für Lastkraftwagen Kunststoffrohre mit einer elastischen Falzung eingesetzt, die allerdings einen kleinen Wärmedurchgangskoeffizienten haben, oder separate Kompensationselemente (DE-A-19739389).

Ein alternatives Verfahren wird in WO 98/04644 vorgeschlagen, in der eine Mikrostruktur in Form einer elastischen Graphitmatrix eingesetzt wird, wobei die Graphitmatrix Poren aufweist, in denen sich das "phase change"-Material befindet. Durch diese poröse Mikrostruktur wird zwar eine gute Wärmeübertragung gewährleistet, ihre Langzeitstabilität ist jedoch bisher nicht nachgewiesen worden. Zudem steht für eine derartige Mikrostruktur bisher keine brauchbare kostengünstige Produktionstechnik zur Verfügung.

Ein weiterer Ansatz zur Realisierung von Mikrostruktur-Wärmetauschern mit definierter Fluidführung durch die Kapillarinnenräume von metallischen Hohlfaserstrukturen ist in der Anmeldung DE 199 10 985.0 vorgeschlagen worden. Ein Wärmetauscher mit polymerer Hohlfaserstruktur wird in US-A-4098852 offenbart.

Aufgabe der vorliegenden Erfindung ist, einen Wärmetauscher, insbesondere einen Mikrostruktur-Wärmetauscher, zur Verfügung zu stellen, der zugleich hohe Wärmedurchgangskoeffizienten und eine hohe Stabilität gegenüber Volumenänderungen bei gleichzeitig geringem Gewicht und Volumen aufweist, und der zudem billig und einfach zu produzieren ist.

Vorteile der Erfindung

Der erfindungsgemäße Wärmetauscher hat gegenüber dem Stand der Technik den Vorteil, dass sich damit auch sehr kleine Rohrdurchmesser beziehungsweise Wandstärken der eingesetzten Rohre realisieren lassen, so dass nunmehr in einfacher Weise eine große Anzahl kleiner Röhrchen parallel oder in Form einer regelmäßigen Anordnung von Röhren verschaltet werden kann. Somit sind einerseits kleine Rohrabstände und damit auch kleine Wärmediffusionslängen in dem erfindungsgemäßen Wärmetauscher realisierbar, was zu einer hohen Leistungsdichte führt, und andererseits ergibt sich auf Grund der kleinen Rohrdurchmesser eine erhöhte Stabilität trotz kleiner Wandstärken sowie ein geringes Gewicht.

Der erfindungsgemäße Wärmetauscher hat weiter den Vorteil, dass die eingesetzte, insbesondere metallische Hohlfaserstruktur einfach und billig zu produzieren ist, ohne dass eine aufwendige Verfahrenstechnik beziehungsweise Verbindungstechnik für die einzelnen Rohre in der Hohlfaserstruktur erforderlich wäre.

Weiter ist vorteilhaft, dass der erfindungsgemäße Wärmetauscher trotz der Verwendung eines Materials, das bei einer Wärmezufuhr oder einer Wärmeabfuhr einen Phasenwechsel durchläuft, einen hohen Wärmedurchgangskoeffizienten aufweist.

Vorteilhafte Weiterbildungen der Erfindungen ergeben sich aus den in den Unteransprüchen genannten Maßnahmen.

So eignet sich als metallische Hohlfaserstruktur besonders vorteilhaft eine Hohlfaserstruktur wie sie in der Anmeldung DE 199 10 985.0 bereits vorgeschlagen worden ist. Dabei ist weiter vorteilhaft, dass es eine Vielzahl von Verschaltungsmöglichkeiten für die eingesetzten Mikro-Röhren in einer derartigen Hohlfaserstruktur gibt, die im Einzelfall an die jeweiligen Anforderungen für den herzustellenden Wärmetauscher angepasst werden können.

Zur Absorption einer Volumenänderung, hervorgerufen durch einen durch Wärmezufuhr oder Wärmeabfuhr induzierten Phasenwechsel ist es weiter vorteilhaft, an der Hohlfaserstruktur mindestens einen, vorzugsweise jedoch eine Vielzahl von elastischen Formkörpern zu befestigen. Alternativ oder zusätzlich können diese elastischen Formkörper jedoch auch in dem Material enthalten sein, das den Phasenwechsel durchläuft. Auf diese Weise wird erreicht, dass die durch den Phasenwechsel auftretende Volumenänderung nicht zu mechanischen Spannungen oder zu Beschädigungen des Wärmetauschers führt, sondern von diesen elastischen Formkörpern absorbiert wird. Als elastische Formkörper eignen sich beispielsweise elastische Kügelchen wie Styropor-Kügelchen, die in dem Gehäuse beziehungsweise dem Material oder Medium, das einen Phasenwechsel durchläuft, insbesondere stochastisch verteilt sind. Alternativ oder zusätzlich können diese elastischen Formkörper jedoch auch beispielsweise durch Ankleben an der Hohlfaserstruktur befestigt sein.

Zeichnungen

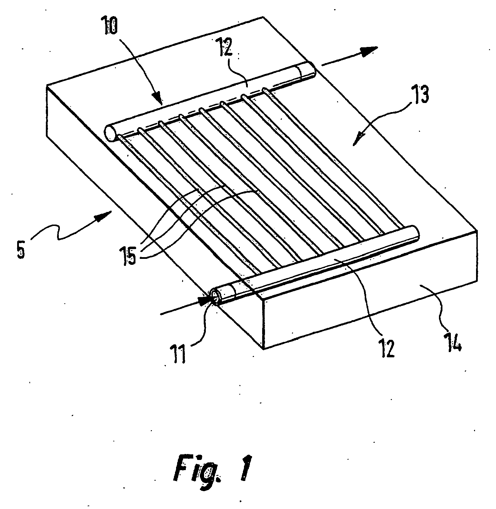

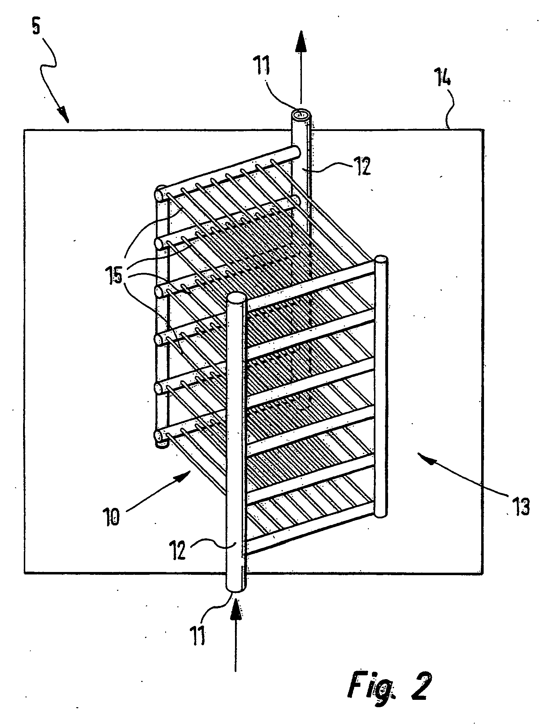

Die Erfindung wird an Hand der Zeichnungen und in der nachfolgenden Beschreibung näher erläutert. Figur 1 zeigt ein erstes Ausführungsbeispiel für einen Wärmetauscher, Figur 2 zeigt ein alternatives Ausführungsbeispiel.

Ausführungsbeispiele

Die Wärmeeinkopplung beziehungsweise Auskopplung in beziehungsweise aus einem Medium oder einem Material, das bei einer Wärmezufuhr oder einer Wärmeabfuhr einen Phasenwechsel durchläuft, erfolgt in den nachfolgend erläuterten Ausführungsbeispielen mit Hilfe einer metallischen Hohlfaserstruktur, in der ein erstes, gasförmiges oder flüssiges Medium strömt. Für den resultierenden Wärmeübergangskoeffizienten ist dabei neben den Wärmeübergangskoeffizienten von dem ersten Medium auf die Hohlfaserstruktur und dem Wärmedurchgangskoeffizienten durch die Hohlfaserstruktur vor allem der Wärmetransport innerhalb des zweiten Mediums von entscheidender Bedeutung. Der Wärmedurchgangskoeffizient k in einem festen "phase change" Material wird dabei einerseits durch die Wärmeleitfähigkeit $\lambda$ des "phase change" Materials und andererseits die Wärmediffusionslänge L bestimmt. Dabei ergibt sich

$$k = \frac{\lambda}{L} \; .$$

Da bekannte "phase change"-Materialien vielfach sowohl in der festen als auch in der flüssigen Phase eine relativ kleine Wärmeleitfähigkeit $\lambda$ aufweisen, bedeutet dies für die Praxis, dass für eine hohe Leistungsdichte eines herzustellenden Wärmetauschers der Abstand zwischen den Röhren, die das zweite Medium durchziehen, im Millimeter- beziehungsweise Submillimeter-Bereich liegen muss. Die nachfolgende Tabelle zeigt exemplarisch für einige "phase change"-Materialien wie Eis, eine wässrige Salzlösung oder Paraffin typische Werte für die Wärmeleitfähigkeit $\lambda$ für einen innerhalb des herzustellenden Wärmetauschers zu erreichenden Wärmedurchgangskoeffizienten k, und die sich daraus ergebenden typischen mittleren Abstände zwischen den Röhren innerhalb einer Hohlfaserstruktur.

| Material | Wärmeleitfähigkeit [W/mK] | Zielvorgabe k-Wert [W/m$^2$ K] | Mittlerer Abstand der Röhren [mm] |
|---|---|---|---|
| Eis | 2,2 | 1000 | 4,4 |
| wässrige Salzlösung | 0,5 | 1000 | 1,0 |
| Paraffine | 0,1 | 1000 | 0,2 |

Die Figur 1 erläutert ein erstes Ausführungsbeispiel für einen Wärmetauscher in Form eines Mikrostruktur-Wärmetauschers 5. Dazu ist vorgesehen, innerhalb eines Gehäuses 14, das beispielsweise die Form einer Platte hat, eine Hohlfaserstruktur 10 anzuordnen, die aus einer Vielzahl von Röhren 15 besteht, die jeweils mit einer Sammelröhre 12 zur Zufuhr eines ersten Mediums 11 verbunden sind, und die andererseits jeweils mit einer Sammelröhre 12 zum Abfuhr des die Röhren 15 beziehungsweise die Sammelröhren 12 durchströmenden ersten Mediums 11 in Verbindung stehen. Das erste Medium 11 ist beispielsweise Wasser, ein Kühlmittel oder Öl. Daneben kommt prinzipiell auch ein Gas in Frage. Weiter ist gemäß Figur 1 vorgesehen, dass das Gehäuse 14 mit einem zweiten Medium 13 gefüllt ist, das die Hohlfaserstruktur 10 umgibt. Dieses zweite Medium 13 ist ein "phase change"-Material wie beispielsweise Wasser, Eis, eine Salzlösung, eine Salzschmelze oder eine kohlenwasserstoffhaltige Verbindung wie beispielsweise ein Paraffin. Der mittlere Abstand zwischen den Röhren 15 in der Hohlfaserstruktur 10 liegt zwischen $100\mu$ m und 5 mm. Die Anzahl und der mittlere Abstand der Röhren 15 ergibt sich dabei einerseits aus der Wärmeleitfähigkeit $\lambda$ des eingesetzten zweiten Mediums sowie der Zielvorgabe für den Wärmedurchgangskoeffizienten k in dem Wärmetauscher 5. Weiter ist dabei auch die Wärmediffusionslänge L in dem zweiten Medium 13 zu berücksichtigen. Die Wandstärke der Röhren 15 der Hohlfaserstruktur 10 liegt zwischen 100 nm und 100 $\mu$m, wobei Wandstärken von 500 nm bis 5 $\mu$m bevorzugt sind.

Der Phasenwechsel in dem zweiten Medium 13 kann dabei ein Phasenwechsel von fest nach flüssig, von flüssig nach fest, von flüssig nach gasförmig, von gasförmig nach flüssig, von fest nach gasförmig oder von gasförmig nach fest sein. Bevorzugt ist ein Phasenwechsel von flüssig nach fest und umgekehrt, wie er beispielsweise im Fall von Wasser beziehungsweise Eis in einem Kältespeicher auftritt. Die Wärmezufuhr beziehungsweise Wärmeabfuhr aus beziehungsweise in das zweite Medium 13 erfolgt im Übrigen in an sich bekannter Weise durch eine Temperaturdifferenz zwischen dem ersten Medium 11 und dem zweiten Medium 13.

Hinsichtlich weiterer Details zu der konkreten Herstellung der insbesondere metallischen Hohlfaserstruktur 10 sei auf die Anmeldung DE 199 10 985.0 verwiesen, wo derartige Hohlfaserstrukturen im Einzelnen beschrieben werden, und wo auch das dazu eingesetzte Herstellungsverfahren erläutert ist. Insbesondere sei betont, dass die Hohlfaserstruktur 10 beispielsweise in Form eines stufenförmigen Aufbaus realisiert sein kann, wobei parallel verlaufende Röhren 15 zu einer zweidimensionalen Struktur, vorzugsweise in sogenannter "Tichelmanscher Verschaltung" verschaltet sind. Weiter ist es möglich, die Hohlfaserstruktur 10 auch in Form einer Spiralwendel-Struktur auszuführen, wobei beispielsweise eine zweidimensionale Hohlfaserstruktur 10 gemäß Figur 1 als Wendel- oder Spiralwendel aufgewickelt wird, so dass damit ein großes Volumen ausgefüllt werden kann. Schließlich ist es ebenso möglich, die Hohlfaserstruktur 10 in Form eines Rohrbündels auszuführen, wobei die Sammelröhren 12 beispielsweise in Form von Rohrplatten ausgebildet sind.

Ein zweites Ausführungsbeispiel wird an Hand der Figur 2 erläutert, die sich von der Figur 1 lediglich dadurch unterscheidet, dass die Hohlfaserstruktur 10 einen modifizierten Aufbau aufweist. Im Übrigen kann das Gehäuse 14 gemäß Figur 2 auch eine von einer Platte abweichende Form aufweisen.

Im Einzelnen besteht die Hohlfaserstruktur 10 gemäß Figur 2 aus einer Mehrzahl von übereinander angeordneten Hohlfaserstrukturen 10 gemäß Figur 1, die untereinander durch Röhren und/oder Stäbchen zur Stabilisierung verbunden sind. Der Abstand zwischen den einzelnen Röhrenebenen gemäß Figur 2 beträgt typischerweise 0,5 bis 5 mm, der Abstand zwischen parallelen Röhren 15 innerhalb einer Röhrenebene, wobei eine Röhrenebene durch eine Struktur gemäß Figur 1 gebildet wird, liegt typischerweise ebenfalls zwischen 0,5 bis 5 mm.

In einer bevorzugten Ausgestaltung des ersten Ausführungsbeispiels beziehungsweise des zweiten Ausführungsbeispiels ist weiter vorgesehen, dass in dem zweiten Medium 13 mindestens ein, vorzugsweise jedoch eine Vielzahl von elastischen Formkörpern enthalten sind. Diese elastischen Formkörper sind beispielsweise Styropor-Kügelchen mit typischen Durchmessern von 0,5 bis 3 mm, die stochastisch innerhalb des zweiten Mediums 13 verteilt sind. Alternativ können diese elastischen Formkörper jedoch auch mit der Hohlfaserstruktur 10 verbunden sein. Dazu werden diese elastischen Formkörper beispielsweise an die Hohlfaserstruktur 10 stochastisch verteilt angeklebt. Als Material für die elastischen Formkörper kommen neben Styropor auch Polyurethaschäume oder andere Polymerschäume in Frage.

Die gemäß den Ausführungsbeispielen 1 oder 2 erläuterten Wärmetauscher eignen sich insbesondere zur Wärmespeicherung beziehungsweise Kältespeicherung in Kraftfahrzeugen, um damit in der Startphase auftretende Lastspitzen zu glätten. Weiter eignen sich derartige Wärmetauscher auch als Latentwärmespeicher in der Haustechnik, wo sie insbesondere als Brauchwasserspeicher für Gasthermen kleiner Leistung oder als Heizungsspeicher Verwendung finden können. Zudem eignen sie sich als Kältespeicher zur Reduzierung von Spitzenlasten in der Klimatechnik.

**Patentansprüche**

1. Wärmetauscher, insbesondere Mikrostruktur-Wärmetauscher, mit mindestens einer von einem ersten, gasförmigen oder flüssigen Medium durchströmten, insbesondere metallischen Hohlfaserstruktur mit einer Vielzahl von Röhren, sowie mit mindestens einem die Hohlfaserstruktur zumindest bereichsweise umgebenden zweiten Medium, das mit dem ersten Medium über die Hohlfaserstruktur wärmeleitend in Verbindung steht, **dadurch gekennzeichnet, dass** das zweite Medium (13) ein Phase Change Material ist oder enthält, das bei einer Wärmezufuhr oder einer Wärmeabfuhr im Betrieb des Wärmetauschers einen Phasenwechsel durchläuft.

2. Wärmetauscher nach Anspruch 1, **dadurch gekennzeichnet, dass** die Hohlfaserstruktur (10) eine insbesondere regelmäßige Anordnung von Röhren (15) ist, die gasdurchgängig oder flüssigkeitsdurchgängig mit mindestens einer Sammelröhre (12) zur Zufuhr des ersten Mediums (11) und mindestens einer Sammelröhre (12) zur Abfuhr des ersten Mediums (11) in Verbindung stehen.

3. Wärmetauscher nach Anspruch 1, **dadurch gekennzeichnet, dass** sich die Hohlfaserstruktur (10) in einem Gehäuse (14) befindet, das das zweite Medium (13) enthält.

4. Wärmetauscher nach mindestens einem der vorangehenden Ansprüche, **dadurch gekennzeichnet, dass** die Wandstärke der Röhren (15) der Hohlfaserstruktur (10) zwischen 100 nm und 100 μm, insbesondere 500 nm und 5 μm, liegt.

5. Wärmetauscher nach mindestens einem der vorangehenden Ansprüche, **dadurch gekennzeichnet, dass** das Gehäuse (14) wärmeleitend mit einem zu kühlenden oder zu heizenden Bauteil in Verbindung steht.

6. Wärmetauscher nach mindestens einem der vorangehenden Ansprüche, **dadurch gekennzeichnet, dass** der Phasenwechsel ein zumindest teilweiser Übergang des Aggregatzustandes des in dem zweiten Medium (13) enthaltenen Materials von fest nach flüssig, flüssig nach fest, flüssig nach gasförmig, gasförmig nach flüssig, fest nach gasförmig oder gasförmig nach fest ist.

7. Wärmetauscher nach mindestens einem der vorangehenden Ansprüche, **dadurch gekennzeichnet, dass** das zweite Medium (13) Wasser, Eis, eine Salzlösung, eine Salzschmelze oder eine kohlenwasserstoffhaltige Verbindung wie Paraffin ist.

8. Wärmetauscher nach mindestens einem der vorangehenden Ansprüche, **dadurch gekennzeichnet, dass** das erste Medium (11) und das zweite Medium (13) eine Temperaturdifferenz aufweisen.

9. Wärmetauscher nach mindestens einem der vorangehenden Ansprüche, **dadurch gekennzeichnet, dass** in dem zweiten Medium (13) mindestens ein elastischer Formkörper, vorzugsweise eine Vielzahl von elastischen Formkörpern, enthalten ist.

10. Wärmetauscher nach mindestens einem der vorangehenden Ansprüche, **dadurch gekennzeichnet, dass** an der Hohlfaserstruktur (10) mindestens ein elastischer Formkörper, vorzugsweise eine Vielzahl von elastischen Formkörpern, befestigt ist.

**Claims**

1. Heat exchanger, in particular microstructured heat exchanger, having at least one in particular metallic hollow fibre structure which has a plurality of tubes and is traversed by a first gaseous or liquid medium, and having at least one second medium which surrounds the hollow fibre structure at least in regions and is connected in heat-conducting fashion to the first medium by means of the hollow fibre structure, **characterized in that** the second medium (13) is or contains a phase change material which undergoes a phase change in the event of a supply of heat or discharge of heat during operation of the heat exchanger.

2. Heat exchanger according to Claim 1, **characterized in that** the hollow fibre structure (10) is an in particular regular arrangement of tubes (15) which are connected, such that they can be traversed by gas or liquid, to at least one collecting tube (12) for the supply of the first medium (11) and at least one collecting tube (12) for the discharge of the first medium (11).

3. Heat exchanger according to Claim 1, **characterized in that** the hollow fibre structure (10) is situated in a housing (14) which contains the second medium (13).

4. Heat exchanger according to at least one of the preceding claims, **characterized in that** the wall thickness of the tubes (15) of the hollow fibre structure (10) is between 100 nm and 100 μm, in particular 500 nm and 5 μm.

5. Heat exchanger according to at least one of the preceding claims, **characterized in that** the housing (14) is connected in heat-conducting fashion to a component which is to be cooled or heated.

6. Heat exchanger according to at least one of the preceding claims, **characterized in that** the phase change is an at least partial transition of the state of aggregation of the material contained in the second medium (13) from solid to liquid, liquid to solid, liquid to gaseous, gaseous to liquid, solid to gaseous or gaseous to solid.

7. Heat exchanger according to at least one of the preceding claims, **characterized in that** the second medium (13) is water, ice, a salt solution, molten salt or a hydrocarbon-containing compound such as paraffin.

8. Heat exchanger according to at least one of the preceding claims, **characterized in that** there is a temperature difference between the first medium (11) and the second medium (13).

9. Heat exchanger according to at least one of the preceding claims, **characterized in that** at least one elastic moulding, preferably a plurality of elastic mouldings, is contained in the second medium (13).

10. Heat exchanger according to at least one of the preceding claims, **characterized in that** at least one elastic moulding, preferably a plurality of elastic mouldings, is fastened to the hollow fibre structure (10).

**Revendications**

1. Echangeur de chaleur, en particulier échangeur de chaleur à microstructures, avec au moins une structure en fibres creuses, notamment métallique, dotée d'un grand nombre de tubes et traversée par un premier fluide gazeux ou liquide et ainsi qu'entourée au moins partiellement par au moins un deuxième fluide relié en conduction thermique au premier fluide par la structure en fibres creuses,
**caractérisé en ce que**
le deuxième fluide (13) est ou contient un matériau de changement de phase qui change de phase pendant le fonctionnement de l'échangeur de chaleur en cas d'admission ou de dissipation de la chaleur.

2. Echangeur de chaleur selon la revendication 1,
**caractérisé en ce que**
la structure en fibres creuses (10) est un montage particulièrement régulier de tubes (15) reliés de manière perméable aux gaz ou aux liquides à au moins un collecteur (12) pour l'entrée du premier fluide (11) et à au moins un collecteur (12) pour la sortie du premier fluide (11).

3. Echangeur de chaleur selon la revendication 1,
**caractérisé en ce que**
la structure en fibres creuses (10) se trouve dans un boîtier (14) contenant le deuxième fluide (13).

4. Echangeur de chaleur selon au moins l'une des revendications précédentes,
**caractérisé en ce que**
l'épaisseur de la paroi des tubes (15) de la structure en fibres creuses (10) est comprise entre 100 nm et 100 $\mu$m, notamment entre 500 nm et 5 $\mu$m.

5. Echangeur de chaleur selon au moins l'une des revendications précédentes,
**caractérisé en ce que**
le boîtier (14) est relié par thermoconduction à un composant à refroidir ou à réchauffer.

6. Echangeur de chaleur selon au moins l'une des revendications précédentes,
**caractérisé en ce que**
le changement de phase est un passage au moins partiel de l'état de l'agrégat du matériau contenu dans le deuxième fluide (13),de solide à liquide, de liquide à solide, de liquide à gazeux, de gazeux à liquide, de solide à gazeux ou de gazeux à solide.

7. Echangeur de chaleur selon au moins l'une des revendications précédentes,
**caractérisé en ce que**
le deuxième fluide (13) est de l'eau, de la glace, une solution saline, des sels fondus ou un composé contenant des hydrocarbures comme de la paraffine.

8. Echangeur de chaleur selon au moins l'une des revendications précédentes,
**caractérisé en ce que**

le premier fluide (11) et le deuxième fluide (13) présentent une différence de température.

9. Echangeur de chaleur selon au moins l'une des revendications précédentes,
**caractérisé en ce que**
le deuxième fluide (13) contient au moins un corps moulé élastique, de préférence un grand nombre de corps moulé élastiques.

10. Echangeur de chaleur selon au moins l'une des revendications précédentes,
**caractérisé en ce qu'**
au moins un corps moulé élastique et de préférence un grand nombre de corps moulés élastiques, sont fixés à la structure en fibres creuses (10).

Fig. 1

Fig. 2